# EUROPEAN PATENT SPECIFICATION

(11) **EP 0 619 334 B1**
(45) Date of publication and mention of the grant of the patent: **28.06.2000**
(21) Application number: 94302021.4
(22) Date of filing: 22.03.1994
(51) Int. Cl.: C08G 67/02

(54) **Process for preparing polyketones**
Verfahren zur Herstellung von Polyketonen
Procédé de préparation de polycétones

(30) Priority: 06.04.1993 GB 9307197
(43) Date of publication of application: 12.10.1994
(73) Proprietor: BP Chemicals Limited, London EC2M 7BA (GB)
(72) Inventor: Cooley, Neil Andrew, Sunbury-on-Thames, Middlesex TW16 7LN (GB); Lodge, Philip Geoffrey, Sunbury-on-Thames, Middlesex TW16 7LN (GB); Smith, Kevin Gerald, Sunbury-on-Thames, Middlesex TW16 7LN (GB)
(74) Representative: Preece, Michael

(56) References cited:
- EP-A- 0 336 459
- EP-A- 0 339 744
- EP-A- 0 340 844
- EP-A- 0 404 228
- EP-A- 0 425 009
- EP-A- 0 428 228

## Description

The present invention relates to a process for preparing polyketones by reacting one or more olefins with carbon monoxide in the presence of a suitable palladium catalyst. In particular, the invention relates to the use of a prepolymer to catalyse the process.

It is known to produce polyketones which are linear alternating polymers of (a) one or more olefins and (b) carbon monoxide, by a liquid phase (slurry) process in which the olefins and carbon monoxide are polymerised together in methanol, ethanol or propanol solvent in the presence of a palladium catalyst. Such a process, which is disclosed in more detail in, for example, EP 121965 and EP 314309, typically employs a catalyst derived from (a) a palladium compound (b) a source of an anion which is either non-coordinating or only weakly coordinating to palladium and (c) a bisphosphine of formula R¹R²P-R-PR³R⁴ where R¹ to R⁴ are independently aryl groups which can optionally be polar substituted and R is a divalent organic bridging group such as -(CH₂)ₙ-(n = 2-6). A source of the anion is typically its conjugate acid.

However, the problem with carrying out the process of the prior art, particularly in alcohol based slurry phase, is that fouling of the reactor occurs. Fouling takes the form of a thin layer of paper-like material which generally coats all wetted metal surfaces of the reactor and upon which particulate product is subsequently deposited. This fouling would severely restrict the operation of the process particularly in the preferred continuous mode.

A number of approaches to overcoming the fouling problem have been tried. Soluble additives can be used. However, these are not very successful at reducing the fouling and in addition increase the complexity of the catalyst system. Seeding the reactor at the start of the process has the effect of decreasing the level of fouling. In particular, the seed material can itself be a polyketone. However, the fouling is decreased, but not eliminated by such an approach.

It has now been found that reactor fouling can be considerably reduced or eliminated altogether by using a "living" polymer (prepolymer) to catalyse the process for preparing polyketones.

Thus according to the present invention there is provided a process for preparing polyketones comprising,
in a first step contacting a mixture of carbon monoxide and one or more olefins in the presence of a suitable palladium catalyst to give a polyketone prepolymer in a particulate form which incorporates said catalyst,
isolating the polyketone prepolymer under conditions such that the catalyst remains substantially chemically bound to the polyketone prepolymer and the prepolymer has a palladium content of at least 500 ppm w/w,
and in a second step contacting carbon monoxide with one or more olefins in the presence of the polyketone prepolymer.

The present invention overcomes the problems of the prior art in that reactor fouling is considerably reduced or eliminated by using a "living" polyketone prepolymer which acts as a catalyst in the preparation of a polyketone.

By the term polyketone is meant a linear polymer comprised of alternating -CO- and -X- units where X is either -CH₂CH₂-, in the case where carbon monoxide and ethylene are copolymerised, or a statistical mixture of -CH₂CH₂- and -CH₂CH(R)- (R = C₁-C₈ alkyl, phenyl or methyl or ethyl substituted phenyl), in the case where carbon monoxide, ethylene and at least one C₃-C₁₀ alpha olefin are polymerised. It is preferred that the process of the present invention is used to prepare polyketones of the latter composition and in particular that the polyketones are those prepared from carbon monoxide and mixtures of ethylene and C₃-C₆ alpha olefins. Most preferred of all are those materials prepared from carbon monoxide and mixtures of ethylene and propylene. For the preferred polyketones, it is preferred that at least 70 mol% of the -X- units are -CH₂CH₂-, most preferably at least 80 mol%. The exact composition of the polyketone can be adjusted by making appropriate changes to the relative proportions of the reactants employed.

The purity of the carbon monoxide used is not especially critical, although it is preferred that it contains less than 20% by volume of other gases such as hydrogen.

The polyketone prepolymer is a polyketone that is of a sufficiently high molecular weight that it is solid and it is in a form that can be isolated and subsequently charged to a polymerisation reactor. However, the prepolymer will usually be of a lower average molecular weight than the final polyketone which is prepared by the process of the present invention. The monomers used in the preparation of the prepolymer can be the same or different to those used in the preparation of the final polymer. For example where the final polymer is a terpolymer of carbon monoxide, ethylene and a second olefin e.g. propylene, the prepolymer may be, for example, prepared from carbon monoxide and ethylene; this has the advantage of simplifying the preparation of the prepolymer.

It is an essential feature of the present invention that the polyketone prepolymer incorporates the palladium catalyst such that the catalyst molecules are substantially chemically bound to the polymer chains of the prepolymer. The palladium atoms will be bound directly to a polymer chain or incipient polymer chain via a Pd-C bond where the carbon atom forms part of a CO group or an X group as defined hereinabove. In this way the polymer chains of the prepolymer can continue to grow when the prepolymer is in contact with carbon monoxide and one or more olefins. It is important that in the process of isolating the prepolymer the catalyst molecule is not disengaged from the polymer chains of the prepolymer. This can occur in several ways, for example if the prepolymer is subjected to a temperature which is higher than the temperature at which the prepolymer was formed, in the absence of one or more of the monomers. Such temperatures must therefore be avoided when isolating the prepolymer. It is preferred that any drying or washing of the prepolymer is conducted at a temperature of at least 10°C preferably at least 20°C, more preferably at least 30°C below the temperature at which the prepolymer was formed. For example, the prepolymer is suitably dried at ambient temperature. It is important to maximise the amount of catalyst left in the prepolymer. The palladium content of the prepolymer is suitably at least 500ppm w/w preferably at least 700ppm w/w and more preferably at least 800ppm w/w. In a preferred embodiment of the present invention, the prepolymer will be prepared in a first vessel then transferred continuously or batchwise to a second vessel where the final polymer is made.

A typical catalyst composition would be that described in EP 121965 and EP 314309, as set out herein above.

The polyketone prepolymer can be used in either a slurry phase reactor or a gas phase reactor, preferably a slurry phase reactor. Where a slurry phase reactor is used the slurry phase can comprise a suitable solvent in which the prepolymer is substantially insoluble, for example, an alcohol (methanol, ethanol), a ketone (acetone) an ether, a halogenated solvent (chloroform, dichloromethane) or a saturated or unsaturated hydrocarbon (toluene, pentane, hexane heptane cyclohexane)or mixtures thereof. However, it is preferred that the slurry phase is a substantially solvent-free liquid olefin, in particular an olefin which is one of the reactants in the polymerisation process, for example, a C₃-C₆ olefin, preferably propylene. Under conditions where a solvent-free olefin system is used and the olefin is totally in the gaseous phase, then sufficient solvent of a type described above can be added to the reactor to be able to conduct the reaction in the liquid phase. In the case where the catalyst composition comprises a source of palladium, a phosphine, arsine or stibine and a strong acid or conjugate base thereof, as described hereinabove, it is possible to add additional quantities of catalyst or additional quantities of acid in the second step.
The invention will now be further illustrated with reference to the following examples.

### Materials and Procedures

Experiments were carried out in a 300 ml stirred autoclave constructed of stainless steel. This could be fitted with a thin walled stainless steel liner if required. The preparation of Pd(dppp)(OAc)₂ (dppp = 1,3 bis(diphenylphosphino)propane) is described below. The preparation of borosalicylic acid (HBSA) and 5-chloroboro salicylic acid (5-ClBSA) are described in US 2,568,472 (Gulf). t-butanol, acetone, propene and 1:1 mixtures of carbon monoxide/ethene were all used as received.

### Results and Discussion

### Preparation of Pd(dppp)(OAc)₂

A filtered solution of 1,3-bis(diphenylphosphino)propane (1.8439g, 4.49 mmol) in toluene (25ml) was added to a filtered solution of palladium acetate (1.0003g, 4.46 mmol) in toluene (100ml) over 5 min, with stirring. Filtration, washing with toluene (10ml) and drying in vacuo gave Pd(dppp)(OAc)₂.H₂O as a very pale yellow/cream powder; yield 2.4970g (88%).

The following experiments are described to illustrate the effect on reactor fouling of (i) adding seed polymer to a conventional slurry phase polymerisation in TBA/acetone, (ii) using prepolymer as seed and catalyst also in TBA/acetone and (iii) using prepolymer in a solvent-free liquid propene system.

Experiment 1 is a baseline and also provided seed polymer. The effect of seed polymer on fouling is seen by comparing experiments 1 and 3 with 2 and 4 respectively. Experiments 5 and 7 are preparations of prepolymers for use in 6 and 8 respectively. The latter illustrate the effect on fouling of using prepolymer in a TBA/acetone slurry system and in a solvent-free liquid propene reaction.

### Experiment 1

The following components were charged to the 300 ml autoclave equipped with a liner: 21.1 mg Pd(dppp)(OAc)₂.H₂O, 2.4002 g 5-ClBSA, 52 ml TBA, 28 ml acetone and 26.78 g propene. The vessel was pressurised to about 35 bar with 1/1 carbon monoxide/ethene and heated to 70^{º}C. The pressure was adjusted to, then maintained at, 55 bar. After 1 hour, the reactor was cooled and vented, 4.655 g of polymer were able to be washed from the vessel, leaving 0.53 g (yields are of dried product). The level of fouling was therefore assessed as 10.2%. The former material, for use as seed polymer, was washed with methanol, extracted with methyl ethyl ketone overnight in a Soxhlet thimble, washed with acetone and dried in a vacuum oven.

### Experiment 2

Experiment 1 was repeated with 21.4 mg Pd(dppp)(OAc)₂.H₂O, 2.4003 g 5-ClBSA, 52 ml TBA, 28 ml acetone, 27.03 g propene and 2.001 g seed polymer from Experiment 1. 5.376 g polymer were washed from the vessel (excluding seed), leaving 0.287 g. The level of fouling was thus 5.1%.

### Experiment 3

The autoclave used in experiment 1 was charged with 2.4037 g 5-ClBSA, 52 ml TBA, 8 ml acetone and 26.97 g propene. The vessel was pressurised to about 35 bar with 1/1 carbon monoxide/ethene and heated to 70ºC. The pressure was adjusted to 55 bar. A solution of 21.2 mg Pd(dppp)(OAc)₂.H₂O in 10 ml acetone was injected, followed by a further 10 ml acetone and the pressure was maintained at 55 bar. After 1 hour the vessel was cooled and vented. 3.529 g polymer were washed from the reactor, leaving 0.599 g. The level of fouling was 14.5%.

### Experiment 4

Experiment 3 was repeated with 2.4026 g 5-ClBSA, 52 ml TBA, 8 ml acetone, 27.01 g propene and 2.0107 g seed polymer from Experiment 1. 21.4 mg Pd(dppp)(OAc)₂.H₂O in 10 ml acetone, followed by 10 ml acetone, were injected. 3.786 g polymer were washed from the vessel (excluding seed), leaving 0.224 g. The level of fouling was 5.6%.

### Experiment 5

The 300 ml autoclave was charged with 3.7038 g HBSA, 60 ml TBA, 20 ml acetone and 23 g propene, then pressurised to about 35 bar with 1/1 carbon monoxide/ethene and heated to 70^{º}C. The pressure was adjusted to 49 bar and a solution of 150.3 mg Pd(dppp)(OAc)₂.H₂O in 30 ml 2/1 TBA/acetone was injected, followed by a further 10 ml acetone and the pressure was maintained at 49 bar. After 0.5 hour the vessel was cooled and vented and the polymer removed and washed 8 times with methanol, then dried in a vacuum oven at ambient temperature. The product was sieved through a fine mesh to provide a uniform sample of living polymer with a Pd content of 980 ppm w/w. Material that would not pass through the mesh was discarded.

### Experiment 6

Experiment 2 was repeated with 2.3997 g 5-ClBSA, 27.3 g propene, 52 ml TBA, 28 ml acetone and 3.5800 g polymer from experiment 5. No Pd complex was added. A total of 6.351 g polymer were washed from the vessel. Only a trace of fouling remained which was not able to be removed cleanly and weighed. Thus the level of fouling was immeasurably small.

### Experiment 7

Experiment 5 was repeated with 3.7007 g HBSA, 23 g propene, 60 ml TBA and 20 ml acetone. 150.3 mg Pd(dppp)(OAc)₂.H₂O in 30 ml 2/1 TBA/acetone were injected, followed by 10 ml acetone. The sieved polymer had a Pd content of 860 ppm w/w.

### Experiment 8

The 300 ml autoclave was charged with 4.002 g polymer from experiment 7 and 69.91 g propene, then pressurised to about 50 bar with 1/1 carbon monoxide/ethene and heated to 70^{º}C. The pressure was adjusted to, then maintained at, 90 bar. After 3 hours, the vessel was cooled and vented and a total of 12.576 g of polymer were tipped out. No material remained in the reactor and thus the level of fouling was zero.

## Claims

1. A process for preparing polyketones comprising,
in a first step contacting a mixture of carbon monoxide and one or more olefins in the presence of a suitable palladium catalyst to give a polyketone prepolymer in a particulate form which incorporates said catalyst,
isolating the polyketone prepolymer under conditions such that the catalyst remains substantially chemically bound to the polyketone prepolymer and the prepolymer has a palladium content of at least 500 ppm w/w, and
in a second step contacting carbon monoxide with one or more olefins in the presence of the polyketone prepolymer.

2. A process as claimed in Claim 1 wherein the palladium catalyst comprises palladium, a phosphine and an anion that is weakly coordinating or non-coordinating to the palladium.

3. A process as claimed in any one of the preceding claims wherein the polyketone prepolymer is isolated at a temperature which is at least 10°C below the temperature at which the prepolymer was formed.

4. A process as claimed in Claim 3 wherein the polyketone prepolymer is isolated at a temperature which is at least 20° below the temperature at which the prepolymer was formed.

5. A process as claimed in any one of the preceding claims wherein the second step is conducted in the liquid phase.

6. A process as claimed in any one of the preceding claims wherein in the second step the prepolymer is contacted with carbon monoxide, ethylene and propylene.

## Patentansprüche

1. Ein Verfahren für die Herstellung von Polyketonen, umfassend,
in einer ersten Stufe das In-Kontakt-bringen einer Mischung von Kohlenmonoxid und eines oder mehrerer Olefine in der Gegenwart eines geeigneten Palladium-Katalysators zur Bildung eines Polyketon-Prepolymeren in einer teilchenförmigen Form, welches den erwähnten Katalysator einschließt,
Isolieren des Polyketon-Prepolymeren unter solchen Bedingungen, daß der Katalysator im wesentlichen chemisch an das Polyketon-Prepolymere gebunden bleibt und das Prepolymere einen Palladium-Gehalt von zumindest 500 ppm Gew./Gew. hat, und
in einer zweiten Stufe das In-Kontakt-bringen von Kohlenmonoxid mit einem oder mehreren Olefinen in der Gegenwart des Polyketon-Prepolymeren.

2. Ein Verfahren, wie in Anspruch 1 beansprucht, worin der Palladium-Katalysator Palladium, ein Phosphin und ein Anion, das schwach koordinierend oder nicht-koordinierend zu dem Palladium ist, enthält.

3. Ein Verfahren, wie in irgendeinem der vorstehenden Ansprüche beansprucht, worin das Polyketon-Prepolymere bei einer Temperatur isoliert ist, welche zumindest 10°C unterhalb der Temperatur liegt, bei welcher das Prepolymere gebildet wurde.

4. Ein Verfahren, wie in Anspruch 3 beansprucht, worin das Polyketon-Prepolymere bei einer Temperatur isoliert ist, welche zumindest 20°C unterhalb der Temperatur liegt, bei welcher das Prepolymere gebildet wurde.

5. Ein Verfahren, wie in irgendeinem der vorstehenden Ansprüche beansprucht, worin die zweite Stufe in der Flüssigphase durchgeführt wird.

6. Ein Verfahren, wie in irgendeinem der vorstehenden Ansprüche beansprucht, worin in der zweiten Stufe das Prepolymere mit Kohlenmonoxid, Ethylen und Propylen in Kontakt gebracht ist.

## Revendications

1. Procédé de préparation de polycétones comprenant, dans une première étape, la mise en contact d'un mélange de monoxyde de carbone et d'une ou plusieurs oléfines en présence d'un catalyseur au palladium approprié pour donner un prépolymère de polycétone sous forme particulaire qui incorpore ledit catalyseur, l'isolement du prépolymère de polycétone dans des conditions telles que le catalyseur reste en grande partie chimiquement lié au prépolymère de polycétone et le prépolymère a une teneur en palladium d'au moins 500 ppm m/m, et dans une deuxième étape, la mise en contact de monoxyde de carbone avec une ou plusieurs oléfines en présence de la polycétone prépolymère.

2. Procédé tel que revendiqué dans la revendication 1 dans lequel le catalyseur au palladium comprend du palladium, une phosphine et un anion qui est faiblement lié ou non lié au palladium.

3. Procédé tel que revendiqué dans l'une des revendications précédentes dans lequel le prépolymère de polycétone est isolé à une température qui est au moins 10°C en dessous de la température à laquelle le prépolymère a été formé.

4. Procédé tel que revendiqué dans la revendication 3 dans lequel le prépolymère de polycétone est isolé à une température qui est au moins 20°C en dessous de la température à laquelle le prépolymère a été formé.

5. Procédé tel que revendiqué dans l'une des revendications précédentes dans lequel la seconde étape est conduite dans la phase liquide.

6. Procédé tel que revendiqué dans l'une des revendications précédentes dans lequel, dans la seconde étape, le prépolymère est mis en contact avec du monoxyde de carbone, de l'éthylène et du propylène.
